# EUROPEAN PATENT SPECIFICATION

(11) **EP 0 852 765 B1**
(45) Date of publication and mention of the grant of the patent: **19.09.2001**
(21) Application number: 96901894.4
(22) Date of filing: 06.02.1996
(51) Int. Cl.: G06F 12/02, G06F 3/06

(54) **MEMORY MANAGEMENT**
SPEICHERVERWALTUNG
GESTION DE MEMOIRE

(30) Priority: 27.09.1995 GB 9519669
(43) Date of publication of application: 15.07.1998
(73) Proprietor: Memory Corporation plc, Dalkeith, Edinburgh EH22 2NA (GB)
(72) Inventor: SINCLAIR, Alan, Welsh, Cottenham Cambridge CB4 4TA (GB)
(74) Representative: MacDougall, Donald Carmichael
(86) International application number: GB9600249
(87) International publication number: WO9712324

(56) References cited:
- WO-A-94/20906
- WO-A-95/10083

## Description

This invention relates to data storage systems and, in particular, to a method of managing a memory in which data can only be written in unwritten memory locations, so that the information stored in the memory can be updated without erasing entire blocks each time the data stored is to be changed. One application of the present invention is in solid state memories which use FLASH memory for the main storage of data and which use FLASH lookup tables to perform the logical to physical address translation. This invention may be used with a number of different memory cells, such as FLASH EPROM cells, chalcogenide memory cells, and ferro-optic cells. Solid state disks receive addresses from the host they are serving in the form of a logical sector address (or by a transformation of Cylinder-Head-Sector addressing from the host). This logical sector addressing is continuous. The logical sector address is mapped to a physical sector address. The physical sector address defines the ordering of sectors in physical memory. Since logical sectors may be assigned to physical sectors in any order, the translation cannot be performed by an algorithm: some form of mapping is required. This mapping is usually performed by means of a lookup table. However, if the lookup table is also composed of FLASH memory cells then individual entries can only be updated by means of a block erasure. This is very inefficient.

In recent years there has been a flurry of activity in the realm of solid state disk devices. This activity has been intensified with the advent of laptop and palmtop portable computers. and the PCMCIA standard. A number of patent applications which have been filed relate to the control methods needed for using FLASH memory as the main data store.

WO 94 20906 relates to a FLASH file system. It uses a block allocation map to store information on the blocks in main FLASH memory which can be written to. When a block is to be updated the allocation map is scanned until a free block is located. A transfer unit is used to facilitate memory reclaiming of the system. The transfer unit is an unwritten erased block of memory. The active (currently valid) data from a block of memory that contains old data (the old block) is written to the same locations in the transfer unit (the new block) and the old block is erased. The old block then becomes the transfer unit. The invention disclosed in WO 94 20906 requires a random access memory to reflect the changes in the block allocation map. The present invention does not require a random access memory, all of the functions necessary to manage the data updating can be performed on non-volatile block erasable memory such as FLASH EPROM.

EP 0 597 706 relates to a solid state peripheral storage device which uses a MAP ROM to map the logical sector address provided by the host to a physical address in the semiconductor memory. The addresses of any bad sectors in semiconductor memory are recorded in the MAP ROM. A microsequencer is used to control the mapping. The MAP ROM is updated when a new physical address is required. The invention relates to floating-gate memories; the method of updating the MAP ROM described in the patent application shows that the MAP ROM could not be a FLASH memory because the MAP ROM must be byte erasable to enable each entry to be updated independently.

WO 95 10083 discloses the use of a CAM (content addressable memory) to search for an address which includes a flag field. The address is searched so that only an address with its flag set to a particular value is found as a match. When an address stores data which becomes obsolete its flag is reset. Thus, only the address with valid data has its flag set, the same logical address (but different physical address) having old data has its flag reset.

The present invention provides a data storage system as set out in claims 1 to 6.

The invention will now be particularly described, by way of example, with reference to the accompanying drawings, in which:

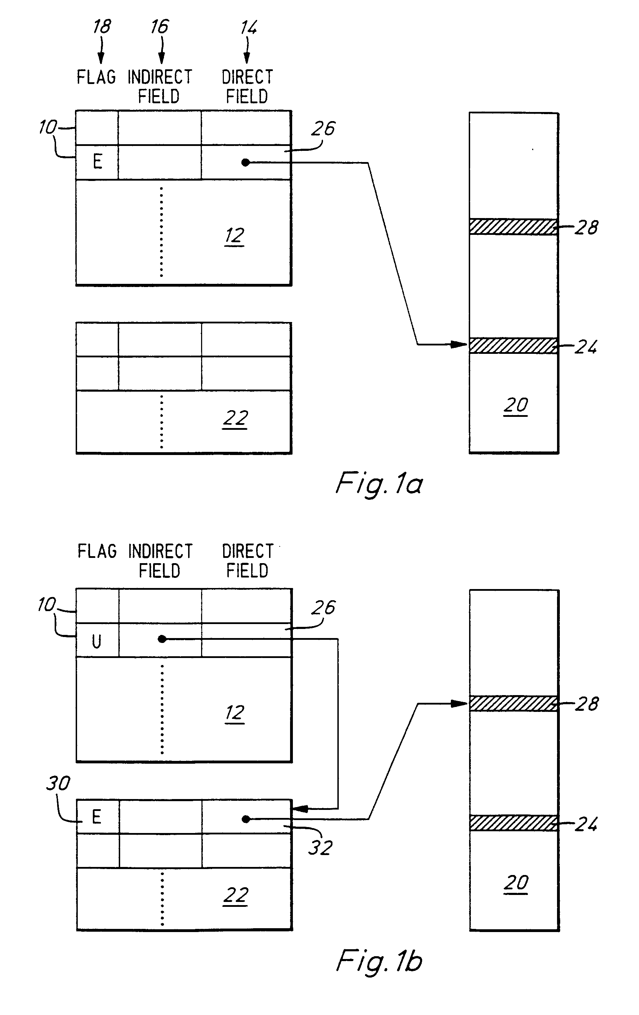

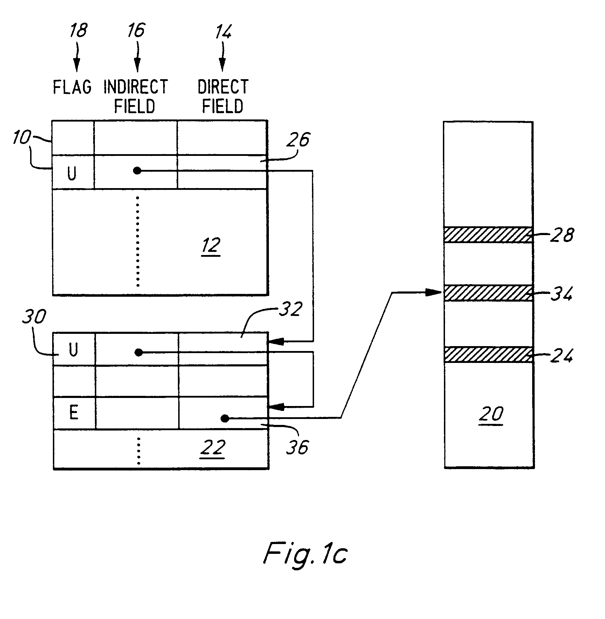

Figures 1A, 1B and 1C illustrate the principle of translating between two addresses using an indirect address field and a direct address field.

Every solid state memory system must convert logical sector addresses received from the host to physical addresses which can be used to address the particular solid state memory devices which are used as the main memory store. Thus, some logical to physical address conversion is required. This embodiment of the present invention uses two lookup tables to maintain a mapping between a logical sector address and its corresponding physical sector address. In other embodiments of this invention only one table may be used, the table performing the same function as the two lookup tables or the previous embodiment.

Referring to Figure 1A, a lookup table entry 10 for each logical sector address value is located in the primary lookup table 12 at a location defined by an address equal to the logical sector address plus the primary lookup table offset.

Each entry in the primary lookup table 12 contains at least three fields: one field stores a main memory address 14, another field stores a linked address 16; and the third field is a pointer flag 18. Each used entry in the primary lookup table 12 either points directly at the physical address of a sector in main memory 20 or provides an indirect pointer to a secondary lookup table 22. In the present embodiment the means of determining whether the primary lookup table entry points to the main memory 20 or whether it points to the secondary lookup table 22 is to read the pointer flag IS in the relevant table entry. If the pointer flag 18 is erased (shown by the letter E in Figures 1A and 1B) then the main memory address is valid. If the pointer is unerased (shown by the letter U in Figures 1A and 1B) then the secondary lookup table address is valid.

Consider the case when there is no data stored in the main memory 20. When data is first written then a logical sector address is supplied by the host together with the data to be stored. The data is stored in a physical location 24 in main memory 20 and the address of this physical location 24 in main memory 20 is stored in the primary lookup table 12 at an entry 26 corresponding to the logical sector address supplied by the host. If, at some later time the data is deleted by the host and new data is sent with the same logical sector address as the old data, then the new data is stored in an unused main memory location 28 (the previous main memory location 24 cannot be overwritten because FLASH memory needs an erase cycle after being written). The primary lookup table 12 must now be updated. This is illustrated in Figure IB.

Figure 1B illustrates how the lookup tables are updated to ensure correct mapping between the logical sector address and the new physical address. The entry 26 in the primary lookup table 12 now needs to be updated with the address of the main memory location 28 for the new data. This is done by writing the pointer flag in the entry corresponding to the logical sector address 26 to logic zero (unset) and the linked address to one of the unused entries in the secondary lookup table 22 (hereinafter referred to as the xxx secondary table entry 32). The pointer flag can be written because it occupies an addressable unit and because it has not been written to since the erase cycle: the inactive state of the pointer is the erased state (logic one). The address of the memory location to which the new data was written is stored in the main memory address field 14 of the xxx secondary lookup table entry 32.

If, at some later time, the new data is deleted by the host and more data is sent (this will be referred to as the latest data) then this latest data is stored in another unused location (this will be referred to as the latest unused location) in main memory 34. This is illustrated in Figure 1C. The primary lookup table 12 is not altered. but the xxx entry in the secondary lookup table 2 now has its pointer flag 30 written so that it is unset (logic zero) and the linked address field is written so that it points to an unused entry in the secondary lookup table (this will be referred to as the yyy secondary lookup table entry 36). The address of the latest unused location is then stored in the main memory field 14 of the yyy secondary lookup table entry 36. This process may continue until the number of unused entries in the secondary lookup table 22 drops below a predetermined value.

Once the secondary lookup table 22 becomes full then a clean-up operation is required. When the primary lookup table 12 is cleaned-up, a new lookup table must be created before the old one is erased to safeguard the information. One way of performing a clean-up operation is to reserve at least one erasable FLASH block in the erased state either above or below the primary lookup table 12. One entry from the primary lookup table 12 is copied to the erased block and the old entry is then erased. As each entry is copied, the main memory address field 14 for that entry is copied from the relevant valid secondary lookup table entry (the entry with its pointer flag in the erased condition). In effect the primary lookup table 12 moves up or down by one erase block. Once this process is complete the secondary lookup table 22 can be erased.

In other embodiments of the present invention only two fields are used: a main memory address and a secondary lookup table address. If the secondary lookup table address contains valid data then that address is read instead of the main memory address. If the secondary lookup table address does not contain valid data then the main memory address is read instead.

## Claims

1. A data storage system for use with a host system and comprising: a plurality of erasable solid-state data storage means (20), wherein each of said storage means is locatable by a unique physical address and each of said storage means, once written, must be erased prior to being rewritten; and control means (12, 22) including non-volatile block erasable storage means for storing a look-up table mapping a plurality of logical addresses received from the host to a corresponding plurality of physical addresses of said data storage means, **characterised in that** said storage means of the control means comprises a plurality of data blocks, there being a respective said data block for each of said logical addresses, and the control means further includes a plurality of spare data blocks, and wherein each said data block and each said spare data block comprises a direct address field (14) and an indirect address field (16), and the control means further includes means for programming the direct address field of the respective said data block of the storage means, the first time a said logical address is supplied from the host with data for writing to the data storage means, with a physical address corresponding to said logical address, and means for programming the indirect address field of said respective data block with the address of an unused said spare data block, and the direct address field of the said spare data block with a new physical address corresponding to the same said logical address, the next time that new data is written to the same said logical address.

2. A data storage system according to claim 1 **characterised in that** the control means further includes means for programming the indirect address field of said spare data block with the address of another unused spare data block, and the direct address field of the latter said unused spare data block with a latest physical address corresponding to the same said logical address, each subsequent time that new data is written to the same said logical address, until the number of unused spare data blocks drops below a predetermined minimum.

3. A data storage system according to claim 1 **characterised in that** each said data block further includes a pointer flag field (18) and the control means includes means for storing a pointer flag in said pointer flag field, for indicating whether the direct address field or the indirect address field of the data block is to be read.

4. A data storage system according to claim 3 **characterised in that** said pointer flag field of each said data block is writable independently of the rest of the data block.

5. A data storage system according to claim 3 or 4 **characterised in that** said pointer flag field of each said data block has an erased state indicating that the indirect address field of the data block is not programmed, and an unerased state indicating that the indirect address field of the data block is programmed.

6. A data storage system according to any one of the preceding claims **characterised in that** the system incorporates means to clean up the data blocks when the number of unused spare data blocks drops below a predetermined threshold.

## Patentansprüche

1. Datenspeicher-System zur Verwendung mit einem Host-System und umfassend: eine Vielzahl von löschbaren Festkörper-Datenspeichereinrichtungen (20), wobei jede der Speichereinrichtungen durch eine einzigartige physikalische Adresse lokalisierbar ist und jede der Speichereinrichtungen, sobald sie beschrieben sind, vor einer Überschreibung gelöscht werden muss; und eine Steuereinrichtung (12, 22) mit einer nicht-flüchtigen Block-löschbaren Speichereinrichtung zum Speichern einer Nachschlagtabelle, die eine Vielzahl von logischen Adressen, die von dem Host empfangen werden, auf eine entsprechende Vielzahl von physikalischen Adressen der Datenspeichereinrichtung abbildet, **dadurch gekennzeichnet, dass** die Speichereinrichtung der Steuereinrichtung eine Vielzahl von Datenblöcken umfasst, wobei ein jeweiliger besagter Datenblock für jede der logischen Adressen vorgesehen ist, und die Speichereinrichtung ferner eine Vielzahl von Ersatzdatenblöcken umfasst, und wobei jeder besagter Datenblock und jeder besagter Ersatzdatenblock ein Direktadressenfeld (14) und ein Indirektadressenfeld (16) umfasst, und die Steuereinrichtung ferner eine Einrichtung umfasst, um das Direktadressenfeld des jeweiligen besagten Datenblocks der Speichereinrichtung, beim ersten Mal, wenn eine besagte logische Adresse von dem Host mit Daten zum Schreiben an die Datenspeichereinrichtung zugeführt wird, mit einer physikalischen Adresse, die der logischen Adresse entspricht, zu programmieren, und eine Einrichtung, um das Indirektadressenfeld des jeweiligen Datenblocks mit der Adresse eines nicht benutzen besagten Ersatzdatenblocks, und das Direktadressenfeld des Ersatzdatenblocks mit einer neuen physikalischen Adresse, die der gleichen logischen Adresse entspricht, beim nächsten Mal, wenn ein neuer Datenwert an die gleiche logische Adresse geschrieben wird, zu programmieren.

2. Datenspeichersystem nach Anspruch 1, **dadurch gekennzeichnet, dass** die Steuereinrichtung ferner eine Einrichtung umfasst, um das Indirektadressenfeld des Ersatzdatenblocks mit der Adresse eines anderen nicht verwendeten Ersatzdatenblocks, und das Direktadressenfeld des letzteren besagten nicht verwendeten Ersatzdatenblocks mit einer jüngsten physikalischen Adresse, die der gleichen besagten logischen Adresse entspricht, bei jedem nachfolgenden Einschreiben eines neuen Datenwerts an die gleiche besagte logische Adresse, bis die Anzahl von nicht verwendeten Ersatzdatenblöcken unter ein vorgegebenes Minimum abfällt, zu programmieren.

3. Datenspeichersystem nach Anspruch 1, **dadurch gekennzeichnet, dass** jeder Datenblock ferner ein Zeigermarken-Feld (18) umfasst und die Steuereinrichtung eine Einrichtung zum Speichern einer Zeigermarke in dem Zeigermarken-Feld umfasst, um anzuzeigen, ob das Direktadressenfeld oder das Indirektadressenfeld des Datenblocks gelesen werden soll.

4. Datenspeichersystem nach Anspruch 3, **dadurch gekennzeichnet, dass** das Zeigermarken-Feld jedes besagten Datenblocks unabhängig von dem Rest des Datenblocks beschreibbar ist.

5. Datenspeichersystem nach Anspruch 3 oder 4, **dadurch gekennzeichnet, dass** das Zeigermarken-Feld jedes Datenblocks einen gelöschten Zustand, der anzeigt, dass das Indirektadressenfeld des Datenblocks nicht programmiert ist, und einen nicht gelöschten Zustand, der anzeigt, dass das Indirektadressenfeld des Datenblocks programmiert ist, aufweist.

6. Datenspeichersystem nach irgendeinem der vorangehenden Ansprüche, **dadurch gekennzeichnet, dass** das System eine Einrichtung zum Aufräumen der Datenblöcke, wenn die Anzahl von nicht verwendeten Ersatzdatenblöcken unter einen vorgegebenen Schwellenwert abfällt, beinhaltet.

## Revendications

1. Système de stockage de données pour une utilisation avec un système hôte et comprenant: une pluralité de moyens de stockage de données à l'état solide effaçables (20), dans lequel chacun desdits moyens de stockage peut être localisé au moyen d'une unique adresse physique et chacun desdits moyens de stockage, une fois qu'il a fait l'objet d'une écriture, doit être effacé avant de faire l'objet d'une réécriture; et un moyen de commande (12, 22) incluant un moyen de stockage non volatile effaçable par blocs pour stocker une table de consultation qui cartographie une pluralité d'adresses logiques qui sont reçues depuis l'hôte selon une pluralité correspondante d'adresses physiques desdits moyens de stockage de données, **caractérisé en ce que** ledit moyen de stockage du moyen de commande comprend une pluralité de blocs de données, un dit bloc de données respectif étant prévu pour chacune desdites adresses logiques, et le moyen de commande inclut en outre une pluralité de blocs de données de secours, et dans lequel chaque dit bloc de données et chaque dit bloc de données de secours comprennent une zone d'adresse directe (14) et une zone d'adresse indirecte (16), et le moyen de commande inclut en outre un moyen pour programmer la zone d'adresse directe dudit bloc de données respectif du moyen de stockage, la première fois où une dite adresse logique est appliquée depuis l'hôte, avec des données pour une écriture sur les moyens de stockage de données, une adresse physique correspondant à ladite adresse logique, et un moyen pour programmer la zone d'adresse indirecte dudit bloc de données respectif avec l'adresse d'un dit bloc de données de secours inutilisé, et la zone d'adresse directe dudit bloc de données de secours avec une nouvelle adresse physique qui correspond à la même dite adresse logique, la fois suivante où de nouvelles données sont écrites à la même dite adresse logique.

2. Système de stockage de données selon la revendication 1, **caractérisé en ce que** le moyen de commande inclut en outre un moyen pour programmer la zone d'adresse indirecte dudit bloc de données de secours avec l'adresse d'un autre bloc de données de secours inutilisé, et la zone d'adresse directe du dernier dit bloc de données de secours inutilisé avec une dernière adresse physique qui correspond à la même dite adresse logique, chaque fois suivante où de nouvelles données sont écrites à la même dite adresse logique, jusqu'à ce que le nombre de blocs de données de secours inutilisés chute au-dessous d'un minimum prédéterminé.

3. Système de stockage de données selon la revendication 1, **caractérisé en ce que** chaque dit bloc de données inclut en outre une zone d'indicateur de pointeur (18) et le moyen de commande inclut un moyen pour stocker un indicateur de pointeur dans ladite zone d'indicateur de pointeur, pour indiquer si la zone d'adresse directe ou la zone d'adresse indirecte du bloc de données doit être lue.

4. Système de stockage de données selon la revendication 3, **caractérisé en ce que** ladite zone d'indicateur de pointeur de chaque dit bloc de données peut faire l'objet d'une écriture indépendamment du reste du bloc de données.

5. Système de stockage de données selon la revendication 3 ou 4, **caractérisé en ce que** ladite zone d'indicateur de pointeur de chaque dit bloc de données présente un état effacé qui indique que la zone d'adresse indirecte du bloc de données n'est pas programmée, et un état non effacé qui indique que la zone d'adresse indirecte du bloc de données est programmée.

6. Système de stockage de données selon l'une quelconque des revendications précédentes, **caractérisé en ce que** le système incorpore un moyen pour nettoyer les blocs de données lorsque le nombre de blocs de données de secours inutilisés chute au-dessous d'un seuil prédéterminé.
